# EUROPEAN PATENT APPLICATION

(11) **EP 3 514 002 A1**
(43) Date of publication of application: **24.07.2019**
(21) Application number: 16920579.6
(22) Date of filing: 03.11.2016
(51) Int. Cl.: B60L 8/00

(54) **GENERATOR DESIGNED FOR A VEHICLE WITH AN ELECTRICAL ENGINE**

(71) Applicant: Lopez Garrido, Jaime, 48499 Zeberio (Vizcaya) (ES)
(72) Inventor: Lopez Garrido, Jaime, 48499 Zeberio (Vizcaya) (ES)
(74) Representative: Espiell Gomez, Ignacio
(86) International application number: PCT/IB2016/056613
(87) International publication number: WO 2018/083518

(57) **Abstract**

A generator designed for a vehicle with an electrical engine is used as a solution to optimize the efficiency and autonomy of electrical vehicles and comprises a chassis (1) consisting of an aluminium grate having on its front end projections (2) which house a shaft (3) incorporating a plurality of blades (4) that move when the vehicle is in motion as a result of the wind thus generated, respectively connected to an electric generator (5); and in which the generators (5) are interconnected in series, are connected to a transformer (9) that sends the current to the electric engine (10) and to an accumulator (11), after having passed through a switch (12) and a current regulator (13) that adapt the current delivered.

## Description

### Object of the invention

The object of this specification is a generator adapted for vehicle with electric motor, that is designed as a power supply means to the electric motor of a vehicle when speeds over ten kilometres/hour are reached.

### Background of the invention

Currently, an electric vehicle can be defined as an alternative fuel vehicle driven by one or more electric motors. The drive can be provided by wheels or propellers driven by rotary motors or in other cases using another type of non-rotary motors, such as linear motors, inertial motors or applications of magnetism as propulsion source.

This type of vehicles, unlike the vehicles using internal combustion motors (specifically designed to work burning fuel), obtains the necessary drive from the electric motor, that can be supplied by different ways, for example, by means of solar energy, by connecting it to the conventional network of electric consumption, electric energy supplied to the vehicle when it is stopped, that is stored on board with rechargeable systems, and that thereafter they consume during their travel, etc.

Among the more significant advantages derived from the use of the electric vehicles, it is achieved that these vehicles are environment friendly (producing less CO2 than any conventional vehicle), they generate less noise (avoiding the noise pollution), they do not use petroleum or derivatives (being a limited raw material that can be used for other uses), etc.

Although, the vehicles that possess as driving means an electric motor, have the main drawback of a limited autonomy, to mitigate this problem (above all in urban environments), small electric loading installations are installed, designed to quickly loading the electric motor battery. But this problem is not overcame, when the electric vehicle is being used in intercity roads.

### Description of the invention

The technical problem that the invention solves is to achieve a generator adapted for vehicles driven by means of electric motor, serving to supply the motor once speeds over ten kilometres/hour are exceeded. For this, the generator adapted for a vehicle with an electric motor, object of this specification is characterized in that it comprises a frame preferably composed of an aluminium grid that, at its front end presents horn-like protrusions, serving as housing of a shaft joined by means of bearing crowns to the frame. And where, the shaft incorporates a plurality of built-in blades (4), approximately 120° apart from each other and that move when the vehicle is moving as a consequence to the wind action, respectively connected with an electric generator (5).

And where, the shaft incorporates a brake and at one of its ends at least a multiplier gearbox is connected, together with a lap regulator or counter and another brake, joined to the right and left electric generators; and where the generators are connected in series and connected to a transformer, that sends the current to the electric motor and to an accumulator previously passing by an intensity switch and regulator that will adapt the current delivered.

Thanks to this generator, the vehicle that incorporates it can charge the battery or extend the autonomy thereof, in a simply manner, provided that the vehicle reaches a 10 km/h speed, especially useful, in journeys through intercity roads or roads having no charging elements for electric vehicles available.

Along the description and the claims, the word "comprise" and its variants do not seek to exclude other technical characteristics, additives, components or steps. For the persons skilled in the art, other objects, advantages and characteristics of the invention will be apparent in part from the description and in part from the implementation of the invention. The following examples and drawings are provided for illustration purpose, and they do not mean to restraint this invention. In addition, this invention covers every possible combination of particular and preferred embodiments appearing herein.

### Short description of the figures

Thereafter, it is disclosed in a very short manner a series of drawings assisting to better understand the invention and that are specifically related to an embodiment of the said invention that is presented for a non-limiting example thereof.

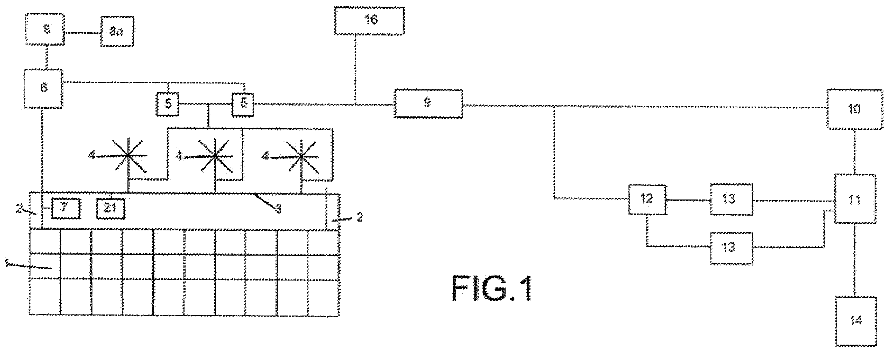

FIG.1. It shows a schematic view of the elements forming the generator adapted for vehicle with electric motor.

### Preferred embodiment of the invention

In the figures enclosed herewith a preferred embodiment of the invention is shown. More concretely, the generator adapted for vehicle with electric motor, object of this specification is characterized in that it comprises a frame or structure (1) preferably composed of an aluminium grid and where, at its front end, it presents horn-like protrusions (2), serving to house a shaft (3) joined by means of bearing crowns to the frame (1).

An where the shaft (3) incorporates, joined to it, a plurality of built-in blades (4), approximately 120° apart from each other and that move when the vehicle is moving as a consequence to the wind action, respectively connected with an electric generator (5).

The shaft (3) incorporates a brake (7) and at one of its ends at least a multiplier gearbox (6) is connected, together with a lap regulator or counter (8) and another brake (8a), joined to the right and left electric generators (5).

The generators (5) are connected in series and from this place they pass to a transformer (9), that will send the current to the electric motor (10) and to an accumulator (11) previously passing by an intensity switch (12) and regulator (13) that will adapt the current delivered.

In the same manner, the motor (10) is connected to an accumulator (11). In a preferred embodiment, the accumulator (11) is connected in turn, to a 12 V battery (14), that supplies the vehicle auxiliary and control systems.

The system will incorporate an electrical device (15) the function of which will be to connect and/or disconnect as well the accumulator (11) as the witch (12). Thus, when the vehicle is started, the accumulator (11) is operating until reaching approximately 10 km/h, a moment when the electric device (15) disconnects the accumulator (11) and activates the switch (12).

All the system will be controlled by control logic means (16), CPU type or the like.

Last, the generator object of this invention incorporates a cooling system (17), located on the frame (1), preferably behind the blades (4) and that, in the practical embodiment, will be formed by spiral tubes and where within it a cooling liquid will circulate that will b e supported by a fan that will generate air so that it is directed towards the blades (4), cooling them and optimizing its operation.

## Claims

1. Generator adapted for a vehicle with electric motor **characterized in that** it comprises a frame or structure (1) preferably composed of an aluminium grid and where at its front end it presents horn-like protrusions (2), serving as housing of a shaft (3) joined by means of bearing crowns to the frame (1); and where, the shaft (3) incorporates a plurality of built-in blades (4), approximately 120° apart from each other and that move when the vehicle is moving as a consequence to the wind action, respectively connected with an electric generator (5); in turn the shaft (3) incorporates a brake (7) and at one of its ends at least a multiplier gearbox (6) is connected, together with a lap regulator or counter (8) and another brake (8a), joined to the right and left electric generators (5); and where the generators (5) are connected in series and connected to a transformer (9), that sends the current to the electric motor (10) and to an accumulator (11) previously passing by an intensity switch (12) and regulator (13) that will adapt the current delivered.

2. Generator according to the claim 1 wherein the motor (10) is connected to an accumulator (11).

3. Generator according to any of the claims 1-2 wherein the accumulator (11) is connected to a 12 V battery (14).

4. Generator according to any of the claims 1-3 wherein it incorporates an electric device (15) the function of which will be to connect and/or disconnect as well the accumulator (11) as the switch (12).

5. Generator according to any of the claims 1-4 wherein all the elements are controlled by control logic means (16).

6. Generator according to any of the claims 1-5 wherein it incorporates a cooling system (17), located on the frame (1), formed by spiral tubes and where a cooling liquid will circulate, and a fan.
